# EUROPÄISCHE PATENTSCHRIFT

(11) **EP 3 550 979 B1**
(45) Veröffentlichungstag und Bekanntmachung des Hinweises auf die Patenterteilung: **01.09.2021**
(21) Anmeldenummer: 17832475.2
(22) Anmeldetag: 07.12.2017
(51) Int. Cl.: B25J 11/00, A21B 7/00, A21B 3/07

(54) **EINRICHTUNG ZUM SPEICHERN, BACKEN UND AUSGEBEN VON BACKWAREN**
DEVICE FOR STORING, BAKING, AND DISCHARGING BAKED GOODS
DISPOSITIF DE STOCKAGE, DE CUISSON ET DE DISTRIBUTION DE PRODUITS DE BOULANGERIE-PÂTISSERIE

(30) Priorität: 07.12.2016 DE 102016123683
(43) Veröffentlichungstag der Anmeldung: 16.10.2019
(73) Patentinhaber: R. Weiss Verpackungstechnik GmbH & Co. KG, 74564 Crailsheim (DE)
(72) Erfinder: WEISS, Reinald, 91626 Schopfloch (DE)
(74) Vertreter: Canzler & Bergmeier Patentanwälte Partnerschaft mbB
(86) Internationale Anmeldenummer: PCT/EP2017/081829
(87) Internationale Veröffentlichungsnummer: WO 2018/104452

(56) Entgegenhaltungen:
- EP-A1- 0 478 085
- EP-A1- 2 399 460
- EP-A2- 0 455 477
- WO-A1-2013/033586
- WO-A2-2007/051645
- BE-A- 535 204
- DE-U1-202007 004 902
- FR-A1- 2 597 239
- US-A1- 2005 193 901

## Beschreibung

Die vorliegende Erfindung betrifft eine Einrichtung zum Speichern, Backen und Ausgeben von Backwaren nach dem Oberbegriff des Anspruchs 1.

Derartige Einrichtungen sind insbesondere für das Backen bzw. Aufbacken von Backwaren in Verkaufseinrichtungen wie beispielsweise Supermärkten von Interesse, bei denen ein hoher Automatisierungsgrad erwünscht ist.

Aus der Druckschrift EP 2 399 460 A1 ist eine Backvorrichtung, welche ein Bevorratungsregal, eine Beschickungseinrichtung, einen Backofen und ein Ausgaberegal umfasst. Mittels der Beschickungseinrichtung werden alle Abschnitte der Backvorrichtung zentral beschickt. Hierzu umfasst die Beschickungseinrichtung eine in horizontaler Richtung auf dem Boden verlaufende Schiene, an welcher eine in vertikaler Richtung ausgerichtete Säule bewegbar gelagert ist. Zudem ist ein in vertikaler Richtung bewegbar gelagerter Lader mit einer Greifeinrichtung für einen Lebensmittelträger ist an der Säule vorgesehen. Die gesamte in der EP 2 300 460 A1 offenbarte Konstruktion benötigt eine große Stellfläche, ist für Reinigungs- und Wartungsarbeiten schwer zugänglich und zudem nur bedingt um weitere Stationen ausbaufähig.

Die US 2005/0193901 A1 offenbart eine Einrichtung nach dem Oberbegriff des Anspruchs 1, wobei ein Vorratsspeicher für gekühlte Ingredienzen, ein Vorratsspeicher für Ingredienzen auf Raumtemperatur und eine Kochstelle vorgesehen sind. Über dieser Einrichtung ist an einem Himmel ein Manipulator bzw. Roboter aufgehängt, der zum Transport der Ingredienzen dient.

Aus der DE 20 2007 004 902 U1 ist eine Einrichtung mit einem Backofen oder zwei nebeneinander angeordneten Backöfen bekannt, wobei Abzieher- bzw. Ausbackwagen eingesetzt werden, bei dem eine Mehrzahl von Abziehapparaten etagenartig übereinander an einem Rahmen befestigt sind und horizontal aus dem Rahmen ein- und ausgefahren werden können. Jeder der Abziehapparate weist an einer seiner Längsseiten einen Kontaktbereich auf, um von einem auf Laufschienen laufenden Portalkran von außen ergriffen zu werden. Der Portalkran ist zumindest auf einem der Backöfen abgestützt.

Die WO 2007/051645 A2 betrifft einen ähnlichen Gegenstand wie die vorgenannte DE 20 2007 004 902 U1. In den Fig. 12C und 12D der WO 2007/051645 A2 ist ein Abziehsystem dargestellt, das entlang mehrerer nebeneinander angeordneter Backöfen verfahren werden kann und mit dem Abziehapparate in bzw. aus jedem Backofen eingeschoben bzw. herausgefahren werden können.

Es ist Aufgabe der vorliegenden Erfindung, eine Einrichtung der eingangs genannten Art derart weiter zu entwickeln, dass auf kleinem Raum und mit relativ wenig Aufwand ein flexibles Transportieren der Träger ermöglicht wird.

Diese Aufgabe wird durch die Merkmale des unabhängigen Anspruchs gelöst.

Die erfindungsgemäße Einrichtung zum Speichern, Backen und Ausgeben von Backwaren weist mehrere Stationen mit jeweils mindestens einem Gehäuse auf. Unter diesen Stationen befindet sich mindestens eine Speicherstationen zur Aufnahme von mit Backwaren bestückten Trägern, eine Backstation zum Backen der auf den Trägern befindlichen Backwaren und eine Ausgabestation zur Präsentation und Entnahme von Backwaren. Mittels mindestens eines Roboters werden Träger zwischen den Stationen transportiert. Erfindungsgemäß umfasst die erfindungsgemäße Einrichtung eine Trageinrichtung zur hängenden Befestigung des Roboters, wobei die Trageinrichtung sich an sich gegenüber aufgestellten Stationen abstützend angeordnet ist.

Die hängende Befestigung des Roboters an ohnehin vorzusehenden Stationen macht eine anderweitige Befestigung des Roboters, insbesondere am Boden oder an einer Decke, überflüssig. Es entfällt beispielsweise ein Verstärkungsfundament am Boden oder eine Deckenverstärkung, welche die Last des Roboters zu tragen hätte. Es können somit beispielsweise nachträglich problemlos weitere Einrichtungselemente zu der Einrichtung hinzugefügt werden, da die Bodenfläche frei zur Verfügung steht. Durch die freie Bodenfläche ist zudem eine einfache Reinigung der Bodenfläche möglich.

Die besagten Träger sind besonders bevorzugt Bleche, beispielsweise mit den Standardabmessungen 40 cm x 60 cm. Die Handhabung und Benutzung von Blechen in Bäckereien ist weit verbreitet und hat sich zum gleichzeitigen Backen mehrerer Backwaren bewährt. Bleche sind robust, können relativ viele Backwaren aufnehmen und sind für das Ergreifen und Fördern mittels Maschinen hervorragend geeignet.

Die besagte Backofenstation kann ein Durchlaufbackofen oder ein Standbackofen sein. Es ist ohne weiteres auch möglich, mehrere Backöfen in der erfindungsgemäßen Einrichtung einzusetzen, wobei diese Backöfen dann bevorzugt nebeneinander oder übereinander aufgestellt werden. Bevorzugt findet ein Durchlaufbackofen Verwendung, welcher zudem vorteilhafterweise mehrere übereinander angeordnete Backkammern aufweist.

Besonders bevorzugt liegt die Trageinrichtung auf den Gehäusen sich gegenüber aufgestellter Stationen auf. Hierbei kann eine optimale Gewichtsverteilung auf mindestens zwei sich gegenüber aufgestellte Stationen realisiert werden.

Es ist vorteilhaft, wenn die besagte Trageinrichtung einen Mittelabschnitt und zwei sich von diesem in entgegengesetzte Richtungen erstreckende Tragabschnitte aufweist, die sich an den besagten Stationen abstützen, bevorzugt auf diesen aufliegen. Der nicht aufliegende Mittelabschnitt wird hierbei vorzugsweise zur Befestigung des mindestens einen Roboters verwendet.

In einer vorteilhaften Weiterbildung der Erfindung greifen die Tragabschnitte in entsprechend komplementär ausgebildete Abschnitte mindestens eines Gehäuses der jeweiligen Station ein. Auf diese Weise lässt sich eine Anpassung der Trageinrichtung an die jeweilige Gehäusegeometrie der abstützenden Stationen realisieren. Es ist auch denkbar, dass die Gehäusegeometrie derart ausgebildet ist, dass ein oder beide Tragabschnitte in Fächer des Gehäuses aufgenommen werden. Es bestehen somit verschiedene Möglichkeiten, ein Abrutschen, Kippen oder Verschieben der Trageinrichtung zu verhindern.

Vorzugsweise ist im besagten Mittelabschnitt eine Tragplatte vorgesehen, an welcher der Sockel des Roboters befestigt ist, vorzugsweise hängend. Der Sockel des Roboters wird somit vorzugsweise an der unteren, zum Boden gerichteten Seite der Tragplatte befestigt. Der Roboter ist vorzugsweise stationär an der Tragplatte befestigt und übernimmt durch Bewegung um mehrere Freiheitsgrade die Handhabung der Träger. Zu diesem Zweck ist der Roboter vorzugsweise mit entsprechenden Antrieben, Sensoren zum Erkennen der Träger, Greifern etc. ausgestattet. Die Träger werden hierbei - vorzugsweise einzeln - durch den Roboter von einer zur nächsten Station gefördert. Der Roboter ist vorzugsweise für den gesamten Transport der Träger zwischen den Stationen zuständig. Durch die stationäre Positionierung des Roboters kann eine hohe Genauigkeit der einzelnen Transportabläufe gewährleistet werden.

Um eine hängende Befestigung des Roboters zu realisieren, ist es vorteilhaft, wenn die erfindungsgemäße Trageinrichtung zwei, vorzugsweise im Wesentlichen parallel laufende, Balken umfasst. Die Balken, welche vorzugs- aber nicht notwendigerweise aus Stahl bestehen, liegen auf zwei sich gegenüberliegenden Stationen auf. Eine im Mittelabschnitt zwischen den Balken angeordnete Tragplatte, die sich auf den Balken abstützt bzw. von diesen getragen wird, dient als Befestigung für den Sockel des Roboters und ist vorzugsweise zentral zu den besagten Stationen angeordnet. Die Anbringung der Tragplatte ist aber nicht auf eine zentrale Position beschränkt, sondern kann alternativ an einer dezentralen Position erfolgen, sofern der Roboter jede der besagten Stationen erreichen kann. Zudem ist es auch denkbar, mehrere Roboter an der gleichen oder zusätzlich vorgesehen Tragplatten zu befestigen.

Eine vorteilhafte Ausführungsform sieht vor, dass die Trageinrichtung mindesten eine Führungsschiene umfasst, an welcher der Sockel des Roboters angeordnet und verfahrbar ist. Beispielsweise können Balken, welche analog der zuvor genannten Balken ausgebildet sein können, als derartige Führungsschienen ausgebildet sein. Eine zwischen den Führungsschienen angeordnete Tragplatte kann vorzugsweise als Befestigung für den Sockel des Roboters dienen. Mittels einer derartigen Ausgestaltung der Trageinrichtung kann der Roboter - im Gegensatz zu einer stationären Befestigung - entlang der Führungsschienen verfahren werden. Diese Ausgestaltung bietet den Vorteil, dass die Einrichtung zum Speichern, Backen und Ausgeben von Backwaren nicht durch den maximalen Bearbeitungsbereich des Roboters begrenzt ist, sondern der Roboter individuell verfahren werden und Träger transportieren kann.

Gemäß einer weiteren vorteilhaften Alternative umfasst die Trageinrichtung eine einstückige langgestreckte Tragplatte, welche stirnseitig jeweils einen Tragabschnitt aufweist, die jeweils auf gegenüberliegenden Stationen aufliegen. In einem Mittelabschnitt dieser Tragplatte ist vorzugsweise der Sockel des Roboters befestigt, zweckmäßigerweise an deren Unterseite. Die Tragplatte ist derart ausgebildet, dass die Länge der Platte deren Breite deutlich übersteigt. Mittels der Verwendung einer einstückigen langgestreckten Tragplatte ist die Anbringung eines, bevorzugt auf der Unterseite der Tragplatte, befestigten Sockels des Roboters nicht auf eine vordefinierte, zentrale Position festgelegt, sondern kann spezifisch auf die jeweiligen Umgebungseinflüsse angepasst werden. Zudem ist es auch denkbar, mehrere Roboter nebeneinander an der einstückigen langgestreckten Tragplatte zu befestigen.

Vorteilhaft ist es, wenn die besagten Stationen derart relativ zueinander angeordnet sind, dass sie eine annähernde Rechteckform mit einem Innenraum bilden. Durch eine derartige Ausgestaltung ist eine zentrale Positionierung des Roboters möglich, da die Stationen im Transport- und Bearbeitungsbereich des Roboters liegen. Durch den gebildeten Innenraum ist eine uneingeschränkte Bewegung des Roboters gewährleistet. Die Rechteckform ermöglicht eine aufliegende Befestigung der Trageinrichtung auf sich gegenüber angeordneten Stationen. Eine Positionierung der besagten Stationen ist jedoch nicht auf eine Rechteckform beschränkt.

Besonders bevorzugt liegen sich mindestens zwei der Speicherstationen gegenüber, auf oder in deren Gehäusen sich die Trageinrichtung abstützt. Die Speicherstationen weisen beispielsweise mehrere Fächer nebeneinander und übereinander auf, in welche die mit den Backwaren bestückten Träger eingeschoben sind. Eine Speicherstation kann hierbei für noch nicht gebackene bzw. aufgebackene Backwaren vorgesehen sein, während in der anderen Speicherstation Träger mit schon gebackenen bzw. aufgebackenen Backwaren gespeichert werden, bevor diese Träger vom Roboter zu der mindestens einen Ausgabestation transportiert werden und die Backwaren dort beispielsweise in Fächer der Ausgabestation abgekippt werden.

Es ist ohne weiteres möglich, dass die gegenüber angeordneten Speicherstationen aus jeweils mehreren Unterspeicherstationen bestehen, wobei diese Unterspeicherstationen dann vorzugsweise nebeneinander aufgestellt werden. Bei einer entsprechend robusten und stabilen Bauweise eignen sich diese besagten Stationen hervorragend dazu, die Trageinrichtung abzustützen, ohne dass zusätzlich angebrachte Verstärkungen erforderlich sind. Eine abstützende Anbringung der Trageinheit ist jedoch nicht nur auf die Speicherstationen beschränkt, sondern kann auch in anderen Variationen mit der Backstation, der Ausgabestation oder in Kombination mindestens einer dieser Stationen mit einer oder mehreren der Speicherstationen realisiert werden, insofern diese derart ausgebildet sind, dass sie insgesamt die Trageinrichtung mitsamt dem mindestens einen Roboter abstützen können.

Es ist von Vorteil, wenn die mindestens eine Speicherstation, der mindestens eine Backofen und die mindestens eine Ausgabestation um den mindestens einen Roboter herum angeordnet sind. Der auf der Trageinrichtung angebrachte Roboter ist somit zentral in Bezug auf die Stationen angeordnet, wobei der Roboter alle Transportwege der Träger realisiert.

Weitere Vorteile der Erfindung sind in den nachfolgenden Ausführungsbeispielen beschrieben. Es zeigt:
- **Figur 1**: eine Draufsicht einer erfindungsgemäßen Einrichtung;
- **Figur 2**: eine Seitenansicht der in Figur 1 dargestellten Einrichtung;
- **Figur 3**: ein weiteres Ausführungsbeispiel einer erfindungsgemäßen Einrichtung in Draufsicht;
- **Figur 4**: eine Seitenansicht der in Figur 3 dargestellten Einrichtung, und
- **Figur 5**: ein weiteres Ausführungsbeispiel einer erfindungsgemäßen Einrichtung in Draufsicht.

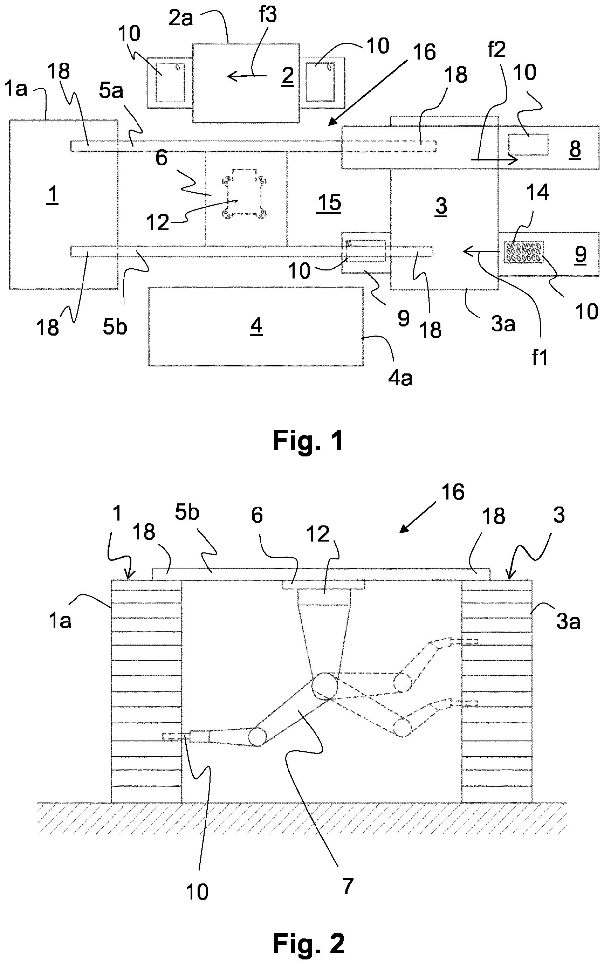

In der Figur 1 ist in Draufsicht eine erfindungsgemäße Einrichtung dargestellt, die vorzugsweise in einem Supermarkt in einem vom Kundenbereich separaten Raum aufgestellt ist, aber an einen Kundenbereich angrenzt. Hierbei sind zwei Speicherstationen 1, 3, ein Durchlaufbackofen als Backstation 2 und eine Ausgabestation 4 vorgesehen. Eine Speicherstation 1 mit einer Mehrzahl von entsprechenden Aufnahmefächern ist für Träger 10, die als Backbleche ausgebildet sind, vorgesehen, welche mit zu backenden bzw. aufzubackenden Backwaren bestückt sind. Die der Speicherstation 1 gegenüber angeordnete Speicherstation 3 ist zur Aufnahme von Trägern 10 vorgesehen, die den Durchlaufbackofen 2 durchlaufen haben und die vor Transport zur Ausgabestation 4 in der Speicherstation 3 zwischengespeichert werden. Die Stationen 1, 2, 3, 4, die allesamt ein entsprechendes Gehäuse 1a, 2a, 3a bzw. 4a aufweisen, sind in einem Rechteck angeordnet und bilden zwischen sich einen Innenraum 15.

Es ist ein Roboter 7 vorgesehen, der Träger 10 mit Backwaren 14 in die Speicherstation 1 einschieben bzw. von dieser entnehmen kann. Von der Speicherstation 1 transportiert der Roboter 7 die Träger 10 in aller Regel zur Backstation 2, wo sie den Durchlaufbackofen (Förderrichtung f3) durchlaufen. Anschließend transportiert der Roboter 7 die Träger zur Speicherstation 3 oder direkt zur Ausgabestation 4. Die Transport- und vorzugsweise Backvorgänge werden vorzugsweise von einer zentralen Steuerung übernommen.

Erfindungsgemäß ist eine Trageinrichtung 16 zur hängenden Befestigung des Sockels 12 des Roboters 7 vorgesehen, welche in der in den Figuren 1 und 2 dargestellten Ausführungsform aus zwei, vorzugsweise im Wesentlichen parallel verlaufenden Balken 5a, 5b und einer zwischen den Balken 5a, 5b verlaufenden Tragplatte 6 besteht. Die Tragplatte 6 ist in einem Mittelabschnitt 17 der beiden Balken 5a, 5b angeordnet, wobei sich vom Mittelabschnitt 17 zwei in entgegengesetzte Richtungen erstreckende Tragabschnitte 18 vorgesehen sind. Die Tragabschnitte 18 liegen stationär auf den Gehäusen 1a, 3a der Speicherstationen 1, 3 auf, wobei die Tragabschnitte 18 mit Befestigungsmitteln, beispielsweise Schrauben, Verschweißungen, usw. an den Gehäusen 1a, 3a befestigt sein können. An der im Mittelabschnitt 17 befindlichen Tragplatte 6 ist der Sockel 12 des Roboters 7 vorzugsweise auf der zum Boden gerichteten Seite hängend und zentral in Bezug auf die Stationen 1, 2, 3, 4 befestigt, beispielsweise durch Verschraubungen. Durch die zentrale Anordnung des Roboters 7 kann dieser jede Station 1, 2, 3, 4 erreichen.

Eine als Anförderband 9 ausgebildete Transporteinrichtung führt zu dem besagten Innenraum 15 der erfindungsgemäßen Einrichtung. Das in den Innenraum 15 ragende freie Ende des besagten Anförderbandes 9 (Förderrichtung f1) stellt die mit Backwaren 14 belegten Träger 10 dem Roboter 7 zur Aufnahme zur Verfügung. Von dort kann der Roboter 7 die Träger 10 zu den jeweiligen Stationen 1, 2, 3, 4 transportieren, vorzugsweise zunächst zu der Speicherstation 1 oder gleich zur Backstation 2. Der Roboter 7 übernimmt vorliegend alle Transportwege der mit oder ohne Backwaren 14 bestückten Träger 10. Ein Abförderband 8 für die entleerten Träger 10 ist in dem dargestellten Ausführungsbeispiel nur schematisch oberhalb des Speichers 3 dargestellt (Förderrichtung f2). Vorzugsweise überführt der Roboter 7 die leeren Träger 10 auf das Abförderband 8, welches aus dem Innenraum 15 herausführt.

Figur 2 stellt eine Seitenansicht der in Figur 1 dargestellten Einrichtung dar. Die Figur 2 zeigt einen Balken 5b mit einer im Mittelabschnitt 17 befindlichen Tragplatte 6, an deren Unterseite der Sockel 12 des Roboters 7 befestigt ist. Ebenso ist schematisch die Ausgestaltung der Speicherstationen 1, 3 mit mehreren nebeneinander und übereinander angeordneten Fächern dargestellt. Die Fächer der jeweiligen Speicherstationen 1, 3 können unterschiedlich hoch ausgebildet sein, damit auch Träger 10, die mit größeren Backwaren 14 beladen sind, in die Speicherstation 1, 3 befördert werden können.

Die Figur 2 zeigt einen beispielhaften Transport der Träger 10 mittels des Roboters 7. Die Träger 10 werden hierbei durch den Roboter 7 von einer zur nächsten Station 1, 2, 3, 4 gefördert. Der Roboter 7 ist somit für bestimmte Wege bzw. Teile des Transports oder für alle Transporte der Träger 10 zuständig.

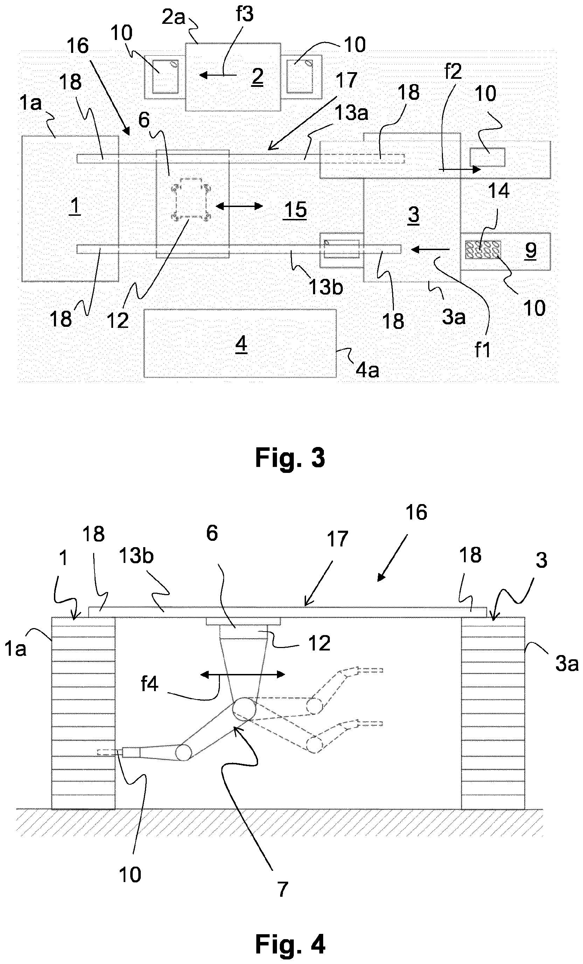

Bei der nachfolgenden Beschreibung des in den Figuren 3 und 4 dargestellten alternativen Ausführungsbeispiels werden für Merkmale, die im Vergleich zu dem in den Figuren 1 und 2 dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

In Figur 3 wird ein Ausführungsbeispiel der erfindungsgemäßen Einrichtung mit einer Trageinrichtung 16 in Draufsicht gezeigt, welche zwei Führungsschienen 13a und 13b vorsieht. Die Führungsschienen 13a, 13b werden mittels der Tragabschnitte 18 aufliegend auf den Gehäusen 1a, 3a der Stationen 1, 3 angeordnet und ggf. noch zusätzlich befestigt. Der Sockel 12 des Roboters 7 wird an der in dem Mittelabschnitt 17 befindlichen Tragplatte 6 befestigt, die - zusammen mit dem Roboter 7 - entlang der Führungsschienen 13a, 13b linear in x-Richtung hin und her bewegt werden kann (s. Doppelpfeil f4).

Figur 4 stellt eine Seitenansicht der in Figur 3 dargestellten Einrichtung dar. Die Figur 4 zeigt eine der beiden vorgesehenen Führungsschienen 13b mit einer im Mittelabschnitt 17 befindlichen Tragplatte 6, an welchen der Sockel 12 des Roboters 7 befestigt ist. Die Tragplatte 6 mitsamt dem Roboter 7 ist in der dargestellten Situation näher zur Speicherstation 1 verfahren, um diese mit einem Träger 10 zu bestücken oder eine Träger 10 zu entnehmen und zur Backstation 2 zu transportieren.

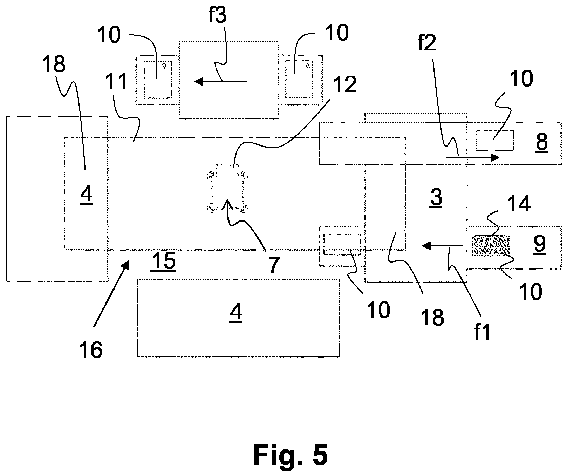

Bei der nachfolgenden Beschreibung des in Figur 5 dargestellten alternativen Ausführungsbeispiels werden für Merkmale, die im Vergleich zum in Figur 1 dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

In Figur 5 ist ein weiteres Ausführungsbeispiel der erfindungsgemäßen Einrichtung in der Draufsicht dargestellt. Die Figur 5 zeigt eine Ausgestaltung der Trageinrichtung 16 als eine einstückige langgestreckte Tragplatte 11 aus beispielsweise Stahl, welche mit ihren Tragabschnitten 18 auf mindestens zwei sich gegenüberliegenden Stationen aufliegt, vorliegend wiederum den Gehäusen 1a, 3a der Speicherstationen 1, 3. An der Tragplatte 11 ist der Sockel 12 des Roboters 7 stationär hängend befestigt. Die einstückige Tragplatte 11 verteilt die Traglast vom Roboter 7 auf eine relativ große Fläche. Die vorliegende Erfindung ist nicht auf die dargestellten und beschriebenen Ausführungsbeispiele beschränkt. Abwandlungen im Rahmen der Patentansprüche sind ebenso möglich.

## Patentansprüche

1. Einrichtung zum Speichern, Backen und Ausgeben von Backwaren, umfassend:
- mehrere Stationen (1, 2, 3, 4) mit jeweils mindestens einem Gehäuse (1a, 2a, 3a, 4a), darunter mindestens eine Speicherstation (1, 3) zur Aufnahme von mit Backwaren (14) bestückten Trägern (10), mindestens eine Backstation (2) zum Backen der auf den Trägern (10) befindlichen Backwaren und mindestens eine Ausgabestation (4), an der Backwaren (14) präsentiert und entnommen werden können, sowie
- mindestens einen Roboter (7), welcher die besagten Träger (10) zwischen den besagten Stationen (1, 2, 3, 4) transportiert,
wobei eine Trageinrichtung (16) zur hängenden Befestigung des Roboters (7) vorgesehen ist,
**dadurch gekennzeichnet, dass** die Trageinrichtung (16) sich an sich gegenüber aufgestellten Stationen (1, 3) der besagten Stationen (1, 2, 3, 4) abstützend angeordnet ist.

2. Einrichtung nach Anspruch 1, **dadurch gekennzeichnet, dass** die Trageinrichtung (16) auf den Gehäusen (1a, 3a) der besagten sich gegenüber aufgestellten Stationen (1, 3) aufliegt.

3. Einrichtung nach einem oder mehreren der vorherigen Ansprüche,
**dadurch gekennzeichnet, dass** die Trageinrichtung (16) einen Mittelabschnitt (17) und zwei sich von diesem in entgegen gesetzte Richtungen erstreckende Tragabschnitte (18) aufweist, die sich an den besagten Stationen (1, 2, 3, 4) abstützen, bevorzugt auf diesen aufliegen.

4. Einrichtung nach einem oder mehreren der vorherigen Ansprüche,
**dadurch gekennzeichnet, dass** die Tragabschnitte (18) in entsprechend komplementär ausgebildete Abschnitte mindestens eines Gehäuses der jeweiligen Stationen (1, 3) eingreifen.

5. Einrichtung nach einem oder mehreren der vorherigen Ansprüche,
**dadurch gekennzeichnet, dass** eine Tragplatte (6) im Mittelabschnitt (17) vorgesehen ist, an welcher ein Sockel (12) des Roboters (7) befestigt ist.

6. Einrichtung nach einem oder mehreren der vorherigen Ansprüche,
**dadurch gekennzeichnet, dass** die Trageinrichtung (16) zwei, vorzugsweise im Wesentlichen parallel laufende, Balken (5a, 5b) aus vorzugsweise Stahl umfasst, welche auf zwei besagten sich gegenüberliegenden Stationen (1, 3) aufliegen und eine zwischen den Balken verlaufende Tragplatte (6) angeordnet ist, an welcher der Sockel (12) des Roboters (7) hängend befestigt ist.

7. Einrichtung nach einem oder mehreren der vorherigen Ansprüche,
**dadurch gekennzeichnet, dass** die Trageinrichtung (16) mindestens zwei Führungsschienen (13a, 13b) umfasst, welche auf zwei besagten sich gegenüberliegenden Stationen (1, 3) aufliegen und dass zwischen den Führungsschienen eine Tragplatte (6) angeordnet ist, an welcher der Sockel (12) des Roboters (7), vorzugsweise hängend, befestigt und verfahrbar ist.

8. Einrichtung nach einem oder mehreren der vorherigen Ansprüche,
**dadurch gekennzeichnet, dass** die Trageinrichtung (16) eine einstückige langgestreckte Tragplatte (11) mit einem Mittelabschnitt und zwei Tragabschnitten umfasst, wobei die Tragabschnitte (18) auf zwei besagten sich gegenüberliegenden Stationen (1, 3) aufliegen, und wobei der Sockel (12) des Roboters (7) an dem Mittelabschnitt befestigt ist, vorzugsweise hängend.

9. Einrichtung nach einem oder mehreren der vorherigen Ansprüche,
**dadurch gekennzeichnet, dass** die besagten Stationen (1, 2, 3, 4) relativ zueinander in einem Rechteck mit einem zentral liegenden Innenraum (15) angeordnet sind.

10. Einrichtung nach einem oder mehreren der vorherigen Ansprüche,
**dadurch gekennzeichnet, dass** sich mindestens zwei Speicherstationen (1, 3) gegenüber liegen, auf welchen sich die Trageinrichtung (16) abstützt.

11. Einrichtung nach einem oder mehreren der vorherigen Ansprüche,
**dadurch gekennzeichnet, dass** der an der Trageinrichtung (16) angebrachte Roboter (7) zentral in Bezug auf die Speicherstationen (1, 3), den mindestens einen Backofen (2) und der mindestens einen Ausgabestation (4) angeordnet ist.

## Claims

1. A device for storing, baking and discharging bakery goods, comprising:
- a plurality of stations (1, 2, 3, 4) each having at least one housing (1a, 2a, 3a, 4a), including at least one storage station (1, 3) for receiving carriers (10) equipped with bakery goods (14), at least one baking station (2) for baking the bakery goods located on the carriers (10) and at least one discharging station (4) at which bakery goods (14) can be presented and removed, as well as
- at least one robot (7) which transports the said carriers (10) between said stations (1, 2, 3, 4),
wherein a carrying device (16) for hanging attachment of the robot (7) is provided,
**characterized in that** the carrying device (16) is arranged being supported by opposite stations (1, 3) of said stations (1, 2, 3, 4).

2. The device according to claim 1, **characterized in that** the carrying device (16) rests on the housings (1a, 3a) of said opposite stations (1, 3).

3. The device according to one or more of the preceding claims, **characterized in that** the carrying device (16) has a central section (17) and two support sections (18) extending therefrom in opposite directions, which are supported by said stations (1, 2, 3, 4), preferably resting on these.

4. The device according to one or more of the preceding claims, **characterized in that** the support sections (18) engage in correspondingly complementary sections of at least one housing of the respective stations (1, 3).

5. The device according to one or more of the preceding claims, **characterized in that** a carrying plate (6) is provided in the central section (17), on which a base (12) of the robot (7) is attached.

6. The device according to one or more of the preceding claims, **characterized in that** the carrying device (16) comprises two, preferably substantially parallel bars (5a, 5b) of preferably steel, which rest on two of said opposite stations (1, 3) and a carrying plate (6) extending between the bars, from which the base (12) of the robot (7) is suspended.

7. The device according to one or more of the preceding claims, **characterized in that** the carrying device (16) comprises at least two guide rails (13a, 13b) which rest on two of said opposite stations (1, 3) and that a carrying plate (6) is arranged between the guide rails, on which the base (12) of the robot (7), preferably hanging, is fixed and movable.

8. The device according to one or more of the preceding claims, **characterized in that** the carrying device (16) comprises a one-piece elongated carrying plate (11) having a central section and two support sections, wherein the support sections (18) rest on two of said opposite stations (1, 3), and wherein the base (12) of the robot (7) is attached to the central section, preferably hanging.

9. The device according to one or more of the preceding claims, **characterized in that** said stations (1, 2, 3, 4) are arranged relative to each other in a rectangle with a centrally located interior space (15).

10. The device according to one or more of the preceding claims, **characterized in that** at least two storage stations (1, 3) are located opposite one another, on which the carrying device (16) is supported.

11. The device according to one or more of the preceding claims, **characterized in that** the robot (7) attached to the carrying device (16) is arranged centrally relative to the storage stations (1, 3), the at least one oven (2) and the at least one discharging station (4).

## Revendications

1. Dispositif pour stocker, cuire au four et distribuer des produits de boulangerie et de pâtisserie, comprenant :
- plusieurs stations (1, 2, 3, 4) avec chacune au moins un boîtier (1a, 2a, 3a, 4a), dont au moins une station de stockage (1, 3) pour recevoir des supports (10) chargés de produits de boulangerie et de pâtisserie (14), au moins une station de cuisson au four (2) pour cuire au four les produits de boulangerie et de pâtisserie situés sur les supports (10) et au moins une station de distribution (4) à laquelle les produits de boulangerie et de pâtisserie (14) peuvent être présentés et prélevés, ainsi que
- au moins un robot (7) qui transporte lesdits supports (10) entre lesdites stations (1, 2, 3, 4),
dans lequel un dispositif porteur (16) est prévu pour la fixation suspendue du robot (7),
**caractérisé en ce que** le dispositif porteur (16) est disposé pour être supporté sur des stations (1, 3) disposées les unes en face des autres parmi lesdites stations (1, 2, 3, 4).

2. Dispositif selon la revendication 1, **caractérisé en ce que** le dispositif porteur (16) repose sur les boîtiers (1a, 3a) desdites stations (1, 3) disposées les unes en face des autres.

3. Dispositif selon l'une quelconque ou plusieurs des revendications précédentes, **caractérisé en ce que** le dispositif porteur (16) comprend une section centrale (17) et deux sections porteuses (18) s'étendant à partir de celle-ci dans des directions opposées, qui s'appuient sur lesdites stations (1, 2, 3, 4), de préférence reposent sur celles-ci.

4. Dispositif selon l'une quelconque ou plusieurs des revendications précédentes, **caractérisé en ce que** les sections porteuses (18) entrent en prise dans des sections formées de manière complémentaire correspondante d'au moins un boîtier des stations (1, 3) respectives.

5. Dispositif selon l'une quelconque ou plusieurs des revendications précédentes, **caractérisé en ce qu'**une plaque de support (6) est prévue dans la section centrale (17), à laquelle est fixé un socle (12) du robot (7).

6. Dispositif selon l'une quelconque ou plusieurs des revendications précédentes, **caractérisé en ce que** le dispositif porteur (16) comprend deux barres (5a, 5b), de préférence sensiblement parallèles, de préférence en acier, qui reposent sur deux dites stations (1, 3) disposée l'une en face de l'autre, et une plaque porteuse (6) est disposée s'étendant entre les barres, à laquelle le socle (12) du robot (7) est fixé en suspension.

7. Dispositif selon l'une quelconque ou plusieurs des revendications précédentes, **caractérisé en ce que** le dispositif porteur (16) comprend au moins deux rails de guidage (13a, 13b), qui reposent sur deux dites stations (1, 3) disposée l'une en face de l'autre, et qu'une plaque porteuse (6) est disposée entre les rails de guidage, à laquelle le socle (12) du robot (7) est fixé, de préférence en suspension, et déplaçable.

8. Dispositif selon l'une quelconque ou plusieurs des revendications précédentes, **caractérisé en ce que** le dispositif porteur (16) comprend une plaque porteuse (11) allongée en une seule pièce, avec une section centrale et deux sections porteuses, dans lequel les sections porteuses (18) reposent sur deux desdites stations (1, 3) disposée l'une en face de l'autre, et dans lequel le socle (12) du robot (7) est fixée, de préférence fixé en suspension, à la section centrale.

9. Dispositif selon l'une quelconque ou plusieurs des revendications précédentes, **caractérisé en ce que** lesdits stations (1, 2, 3, 4) sont disposées les unes par rapport aux autres en un rectangle avec un espace intérieur (15) situé au centre.

10. Dispositif selon l'une quelconque ou plusieurs des revendications précédentes, **caractérisé en ce qu'**au moins deux stations de stockage (1, 3) sont situées l'une en face de l'autre, sur lesquelles s'appuie le dispositif porteur (16).

11. Dispositif selon l'une quelconque ou plusieurs des revendications précédentes, **caractérisé en ce que** le robot (7) fixé au dispositif porteur (16) est disposé de manière centrale par rapport aux stations de stockage (1, 3), à l'au moins un four de cuisson (2) et à l'au moins une station de distribution (4).
